**Europäisches Patentamt**

**European Patent Office**

**Office européen des brevets**

(11) Veröffentlichungsnummer: **0 306 816**
**A1**

## (12) EUROPÄISCHE PATENTANMELDUNG

(21) Anmeldenummer: **88114192.3**

(22) Anmeldetag: **31.08.88**

(51) Int. Cl.⁴: **B62D 53/08 , B60D 1/14**

(30) Priorität: **08.09.87 DE 3730101**

(43) Veröffentlichungstag der Anmeldung:
**15.03.89 Patentblatt 89/11**

(84) Benannte Vertragsstaaten:
**AT BE CH DE FR IT LI LU NL**

(71) Anmelder: **F.X. KÖGEL GMBH & CO.**
**FAHRZEUGWERKE**

**D-7900 Ulm(DE)**

(72) Erfinder: **Thomas, Heinz**
**Uhlandstrasse 7**
**D-7906 Blaustein 1(DE)**
Erfinder: **Mahler, Wilhelm**
**Kirchenweg 1a**
**D-7914 Pfaffenhofen(DE)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) **Verfahren und Anordnung zur hydraulischen Längenverstellung einer Zugdeichsel für einen Zentralachsanhänger.**

(57) Um ein Verfahren und eine Anordnung zur hydraulischen Längenverstellung einer teleskopierbaren Zugdeichsel für einen Zentralachsanhänger, wobei die Zugdeichsel automatisch bei einem Auslenken gegenüber der Mittelachse des Zugfahrzeuges, d.h. bei Kurvenfahrt, ausgefahren und nach der Rückkehr in die Mittelachse, d.h. bei Geradeausfahrt, wieder eingefahren wird, dahingehend weiterzubilden, daß diese bei Kurvenfahrt möglichst wenig arbeitet, einem geringen Verschleiß unterworfen ist und technisch möglichst einfach aufgebaut ist, erfolgt erfindungsgemäß das Ausfahren der Zugdeichsel schneller als das Einfahren. Dabei wird das Hydraulikmedium zum schnellen Ausfahren der Zugdeichsel einem Druckspeicher (17) entnommen und dieser im Verlaufe des vergleichsweise langsamen Einfahrens der Zugdeichsel parallel zum Einfahrvorgang langsam wieder gefüllt.

FIG. 3

# Verfahren und Anordnung zur hydraulischen Längenverstellung einer Zugdeichsel für einen Zentralachsanhänger

Die vorliegende Erfindung betrifft ein Verfahren zur hydraulischen Längenverstellung einer teleskopierbaren Zugdeichsel für einen Zentralachsanhänger, wobei die Zugdeichsel automatisch bei einem Auslenken gegenüber der Mittelachse des Zugfahrzeuges, d.h. bei Kurvenfahrt, ausgefahren und nach der Rückkehr in die Mittelachse, d.h. bei Geradeausfahrt, wieder eingefahren wird.

Die Erfindung betrifft ferner eine Anordnung zur Durchführung des Verfahrens, mit einer aus einem Auszugteil und einem Festteil bestehenden Zugdeichsel, einem zwischen dem Auszugteil und dem Festteil eingekoppelten Verstellzylinder, der mit einer Hydraulikanordnung in Verbindung steht, die über eine elektrische Steueranordnung betätigbar ist, welche über Sensoren den Ausschlag der Zugdeichsel gegenüber der Mittelachse des Zugfahrzeuges automatisch abtastet.

Verfahrensweisen und Anordnung zur hydraulischen Längenverstellung einer Zugdeichsel für einen Zentralachsanhänger sind bekannt. Sie dienen zur Vergrößerung des nutzbaren Teiles der Gesamtlänge eines Lastzuges durch Verringerung des Abstandes zwischen dem Zugfahrzeug und dem Anhänger, ohne daß Einschränkungen hinsichtlich der Kurvenfähigkeit des Lastzuges hingenommen werden müßten.

Bei Verfahrensweisen und Anordnungen der bekannten Art sind am Zugfahrzeug im Bereich der Anhängerkupplung für die Zugöse der Zugdeichsel Sensoren in Form von Lichtschranken vorgesehen, die beim Auslenken der Zugdeichsel gegenüber der Mittelachse des Zugfahrzeuges, d.h. bei Kurvenfahrt, über die elektrische Steueranordnung ein Signal an eine im Zugfahrzeug angeordnete Hydraulikpumpe geben, welche Hydraulikflüssigkeit unter Druck über eine flexible Hydraulikleitung in den Verstellzylinder der Zugdeichsel einspeist, wodurch dieser ausgefahren wird. Kehrt die Zugdeichsel in die Mittelachse des Zugfahrzeuges zurück, d.h. befindet sich der Lastzug wieder in Geradeausfahrt, so erhält die Hydraulikpumpe im Zugfahrzeug von den Lichtschranken erneut ein Signal, wodurch Hydraulikflüssigkeit in der umgekehrten Richtung in den Verstellzylinder der Zugdeichsel eingespeist wird und diese automatisch wieder einfährt.

Verfahrensweisen und Anordnungen dieser Art haben den Nachteil, daß sie bei kurvenreichen Strecken ununterbrochen arbeiten. So wird die Zugdeichsel bei jeder Kurve voll ausgefahren, bei Rückkehr in die Mittelachse wieder voll eingefahren und im Anschluß daran bei einer erneuten Kurve wieder voll ausgefahren. Insbesondere bei Bergstrecken führt dieses ununterbrochene Arbeiten zu einem starken Verschleiß der Führungen, der Ventile und der übrigen bewegten Teile der Hydraulikanordnung. Durch das dauernde Arbeiten der Anordnung wird die Hydraulikflüssigkeit sehr stark erwärmt, so daß eine große Umlaufmenge und gegebenenfalls eine Kühlanordnung vorgesehen werden müssen. Anordnungen dieser Art sind daher technisch relativ aufwendig und voluminös.

Aufgabe der vorliegenden Erfindung ist es, eine Verfahrensweise sowie eine Anordnung zur hydraulischen Längenverstellung einer Zugdeichsel für einen Zentralachsanhänger zu schaffen, die bei Kurvenfahrt möglichst wenig arbeitet, deshalb einem geringeren Verschleiß unterworfen ist und technisch möglichst einfach aufgebaut ist.

Diese Aufgabe wird gemäß dem erfindungsgemäßen Verfahren auf verblüffend einfache Weise dadurch gelöst, daß das Ausfahren der Zugdeichsel schneller als das Einfahren erfolgt. Im Falle einer Anordnung zur Durchführung des Verfahrens ist es erfindungsgemäß deshalb lediglich erforderlich, die Hydraulikanordnung und/oder die elektrische Steueranordnung derart zu gestalten, daß das Hydraulikmedium in den Verstellzylinder zum Ausfahren des Auszugteiles der Zugdeichsel schneller eingespeist wird als das Hydraulikmedium zum Einfahren des Auszugteiles.

Durch die erfindungsgemäße Maßnahme wird erreicht, daß die Zugdeichsel bei Kurvenfahrt zwar unverzüglich und schnell ausgefahren wird, so daß der hintere Teil der Aufbauten des Zugfahrzeuges mit dem vorderen Teil der Aufbauten des Anhängers nicht kollidieren kann. Aufgrund der vergleichsweise langsamen Einfahrbewegung der Zugdeichsel bleibt diese jedoch bei kurvenreichen Strecken, wie beispielsweise auf Bergstraßen, praktisch weitgehend ausgefahren, so daß der Verschleiß der bewegten Teile, insbesondere der Führungen und des Verstellzylinders, auf ein Minimum beschränkt wird. Da bei andauernder Kurvenfahrt praktisch keine Ölmenge umgewälzt wird, ist die Ölerwärmung relativ gering, so daß die Anordnung mit einer relativ kleinen Umlaufmenge auskommt, wodurch das Bauvolumen der Anordnung stark reduziert wird.

Eine besonders vorteilhafte Arbeitsweise wird dann erreicht, wenn das Hydraulikmedium zum schnellen Ausfahren der Zugdeichsel einem Druckspeicher entnommen und dieser im Verlaufe des vergleichsweise langsamen Einfahrens der Zugdeichsel parallel zum Einfahrvorgang langsam wieder gefüllt wird.

Die Anordnung eines Druckspeichers hat den Vorteil, daß die für den Ausfahrvorgang benötigte Menge von Hydraulikmedium unter hohem Druck vollständig und schlagartig zur Verfügung steht. Der Ausfahrvorgang für die Zugdeichsel kann daher den jeweiligen Anforderungen und der jeweiligen Konstruktion entsprechend hinsichtlich der Geschwindigkeit optimal gestaltet werden. Bleibt der Lastzug in Kurvenfahrt, so bleibt die Zugdeichsel voll ausgefahren. Die Hydraulikpumpe arbeitet dabei weder beim Ausfahrvorgang noch bei andauernder Kurvenfahrt. Kehrt die Zugdeichsel dann in die Mittelachse zurück, so beginnt die Hydraulikpumpe zu arbeiten und fährt die Zugdeichsel vergleichsweise langsam ein. Parallel zum Einfahrvorgang der Zugdeichsel wird der Druckspeicher in der gleichen Weise langsam wieder gefüllt. Ist die Zugdeichsel auf einer kurzen Geradeausstecke nur etwas eingefahren worden, so wird sie bei der darauf folgenden Kurve sogleich wieder voll ausgefahren, wobei die Hydraulikpumpe - wie oben bereits erläutert - beim Ausfahrvorgang und bei der daran anschließenden Kurvenfahrt den Pumpvorgang wieder einstellt.

Das langsame, stets parallel zueinander erfolgende Einfahren der Zugdeichsel und Auffüllen des Druckspeichers kann auf verschiedenste Weise realisiert werden. Wesentlich ist lediglich, daß sichergestellt ist, daß der Verstellzylinder stets lediglich in dem Maße eingefahren wird, wie der Druckspeicher gefüllt wird. Dies kann beispielsweise dadurch erfolgen, daß als Verstellzylinder ein doppelt wirkender Gleichlaufzylinder eingesetzt wird, dessen beim Einfahrvorgang der Zugdeichsel ausgestoßene Menge des Hydraulikmediums zum Füllen des Druckspeichers eingesetzt wird.

Bei bekannten Verfahrensweisen und Anordnungen der eingangs beschriebenen Art ist es erforderlich, beim Abkuppeln des Anhängers auch die Hydraulikleitungen abzukuppeln. Dies erschwert die Handhabung und hat darüber hinaus den Nachteil, daß wegen der auf dem Zugfahrzeug angeordneten Hydraulikpumpe stets nur kompatible Anhänger für eine derartige Anlage eingesetzt werden können.

Gemäß einer vorteilhaften Weiterbildung der Erfindung ist deshalb die Hydraulikanordnung einschl. Hydraulikpumpe und der elektrischen Steueranordnung vollständig auf dem Zentralachsanhänger angeordnet. Die Hydraulikpumpe wird bei diesem bevorzugten Ausführungsbeispiel von einem Luftmotor angetrieben, der über die ohnehin im Anhänger vorhandene Bremsluftleitung versorgt wird. Die Hydraulikpumpe kann jedoch im Bedarfsfalle auch über einen Hydraulikmotor oder einen Elektromotor angetrieben werden. Die Versorgung der elektrischen Steueranordnung mit Strom erfolgt über die ohnehin bei derartigen Anhängern vorhandene Stromversorgung.

Wie eingangs bereits erwähnt, sind bei bekannten Anordnungen die Sensoren in Form von Lichtschranken ausgebildet. Derartige Lichtschranken sind sehr anfällig gegen Verschmutzung. Gemäß einer vorteilhaften Weiterbildung werden daher bei der erfindungsgemäßen Verfahrensweise und Anordnung berührungslos arbeitende Näherungsschalter vorgesehen. Als Sensoren können jedoch jederzeit auch andere zur Signalgebung geeignete Mittel vorgesehen werden.

Bei Lastzügen, bei denen der Zentralachsanhänger über eine Sattelkupplung mit dem Zugfahrzeug verbunden ist, besitzt die Zugdeichsel zum Anschluß an die Sattelkupplung eine Kupplungsplatte. Eine derartige Kupplungsplatte eignet sich in hervorragender Weise zur Anordnung von Sensoren, vorzugsweise von berührungslos arbeitenden Näherungsschaltern.

Um sicherzugehen, daß bei Ausfall eines Näherungsschalters bei Kurvenfahrt der hintere Teil der Aufbauten des Zugfahrzeuges nicht mit dem vorderen Teil der Aufbauten des Anhängers kollidiert, ist es vorteilhaft, jeweils zwei parallelgeschaltete Näherungsschalter vorzusehen.

Im folgenden ist zur weiteren Erläuterung und zum besseren Verständnis ein Ausführungsbeispiel der Erfindung unter Bezugnahme auf die beigefügten Zeichnungen näher beschrieben und erläutert.

Fig. 1 zeigt in einer Seitenansicht teilweise aufgebrochen eine Zugdeichsel für einen Zentralachsanhänger mit Kupplungsplatte und Sattelkupplung,

Fig. 2 zeigt die Zugdeichsel nach Fig. 1 in einer Draufsicht, und

Fig. 3 zeigt in einer Schemadarstellung die wichtigsten Elemente eines Ausführungsbeispieles einer Hydraulikanordnung mit elektrischer Steueranordnung.

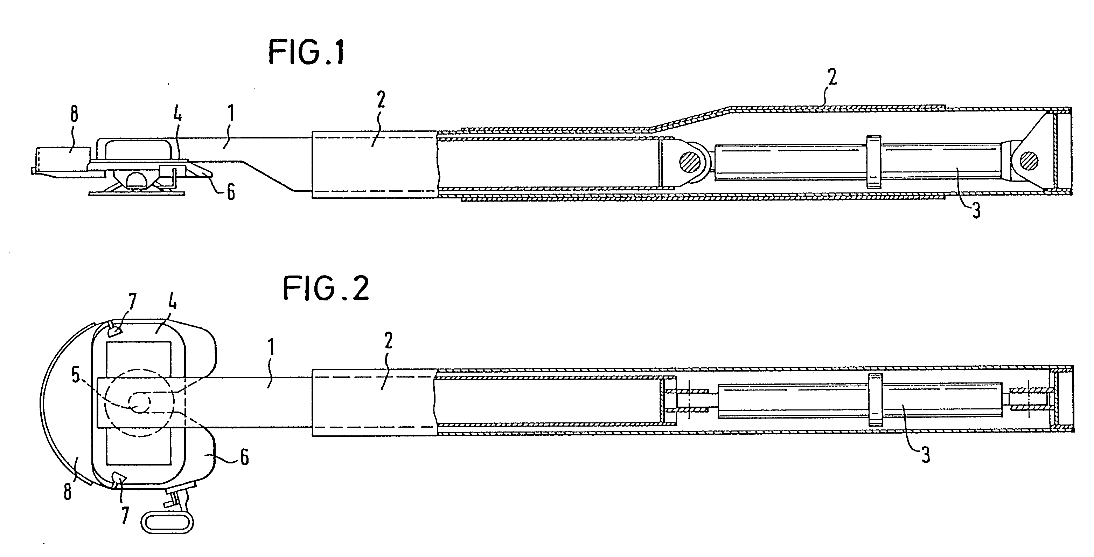

Wie aus den Fig. 1 und 2 hervorgeht, besteht die teleskopierbare Zugdeichsel aus einem Auszugteil 1, welches innerhalb eines Festteiles 2 hin- und herverschiebbar geführt ist. Zwischen das Auszugteil 1 und das Festteil 2 ist ein Verstellzylinder 3 eingekoppelt, der im vorliegenden Ausführungsbeispiel als Gleichlaufzylinder ausgebildet ist. Das Auszugteil 1 ist im Bereich seines freien Endes mit einer Kupplungsplatte 4 bekannter Bauart ausgestattet, die über einen Zugsattelzapfen 5 mit einer Kupplungsplatte 6 einer Sattelkupplung bekannter Bauart lösbar verbunden ist.

Auf der Kupplungsplatte (4) sind zu beiden Seiten der Längsmittelachse Sensoren in Form von sogenannten Näherungsschaltern 7 angeordnet. Diese Näherungsschalter arbeiten im vorliegenden Ausführungsbeispiel mit einem Auslöseelement in Form einer Schaltleiste 8 zusammen die auf der Sattelkupplung angeordnet ist.

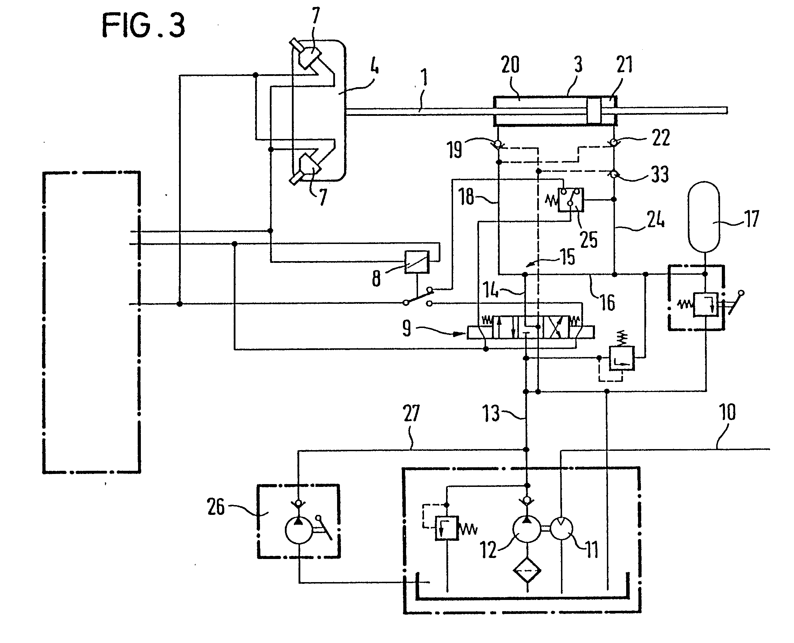

Sobald bei Kurvenfahrt die Zugdeichsel gegenüber der Mittelachse des Zugfahrzeuges ausgelenkt wird, verdreht sich die Kupplungsplatte 4 um den Zugsattelzapfen 5 auf der Kupplungsplatte 6 der Sattelkupplung. Dadurch wird einer der auf der Kupplungsplatte 4 befestigten Näherungsschalter 7 in den Bereich 8 der Schaltleiste 6 geschwenkt, wodurch der jeweilige Näherungsschalter 7 -wie sich aus dem Schaltschema gemäß Fig. 3 ergibt - ein Schaltrelais 8 betätigt, welches in elektrischer Verbindung mit Elektromagneten eines Wegeventiles 9 steht, dessen Funktion später noch beschrieben wird.

Wie aus dem Schema gemäß Fig. 3 hervorgeht, ist eine Leitung 10 vorgesehen, über welche aufbereitete Druckluft, die bei Anhängern über die Bremsanlage zur Verfügung steht, einem Luftmotor 11 zugeführt wird. Der Luftmotor 11 treibt eine Hydraulikpumpe 12 an, welche über eine Leitung 13 Hydraulikflüssigkeit dem Wegeventil 9 zuführt. Von dem Wegeventil 9 führt eine Leitung 14 zu einer Abzweigung 15. Von der Abzweigung 15 führt eine Leitung 16 zu einem Druckspeicher 17, der vorzugsweise als sogenannter Blasenspeicher ausgebildet ist. Von der Abzweigung 15 führt ferner eine Leitung 18 über ein entsperrbares Rückschlagventil 19 zu dem Verstellzylinder 3. Die Leitung 18 mündet in eine Kammer 20 des Verstellzylinders 3, bei deren Beaufschlagung mit Hydraulikflüssigkeit der Auszugteil 1 der Zugdeichsel einschl. Kupplungsplatte 4 eingefahren wird. Die andere Kammer 21 des Verstellzylinders 3 steht über entsperrbare Rückschlagventile 22 und 23 über eine Leitung 24 mit der Leitung 16 und damit mit dem Druckspeicher 17 in Verbindung.

In die Leitung 24 ist ein Druckschalter 25 eingeschaltet, der mit dem Schaltrelais 8 und dem Wegeventil 9 in elektrischer Verbindung steht und dessen Funktion später ebenfalls noch beschrieben wird.

Die Hydraulikanordnung ist ferner mit einer Handpumpenanordnung 26 ausgestattet, die über eine Leitung 27 mit der Leitung 13 in Verbindung steht. Sollte aus irgendeinem Grunde die Elektrik oder Pneumatik ausfallen, so ist es möglich, über die Handpumpenanordnung 26 das Auszugteil 1 des Verstellzylinders 3 auszufahren.

Im Ausgangszustand ist der Verstellzylinder 3 eingefahren, wie dies in Fig. 3 dargestellt ist. Der Druckspeicher 17 ist in diesem Zustand mit Hydraulikflüssigkeit (Volumen der Kammer 21 einschl. Reservevolumen) gefüllt und durch eine Gasfüllung in an sich bekannter Weise vorgespannt. Das Wegeventil 9 ist stromlos und befindet sich - wie in Fig. 3 dargestellt - in seiner Mittelstellung.

Die Hydraulikpumpe 12 steht zu diesem Zustand still, da im Druckspeicher 17 der Maximaldruck erreicht ist. In diesem Zustand wird somit auch keine Luft für den Luftmotor 11 benötigt.

Wird nun die Zugdeichsel im Falle einer Kurvenfahrt gegenüber der Mittelachse des Zugfahrzeuges ausgelenkt, so betätigt einer der Näherungsschalter 7 das Schaltrelais 8, welches wiederum das Wegeventil 9 in Fig. 3 nach links verschiebt. Aufgrund der Verschiebung des Wegeventiles 9 nach links fällt der Druck in der Leitung 13 ab, wodurch automatisch über die nicht näher dargestellte elektrische Steueranordnung der Luftmotor 11 mit Druckluft versorgt wird und die Hydraulikpumpe 12 Hydraulikmedium in die Leitung 13 fördert. Dadurch werden über die in Fig. 3 gestrichelt dargestellten Steuerleitungen die entsperrbaren Rückschlagventile 19 und 23 geöffnet. Die im Druckspeicher 17 gespeicherte Hydraulikflüssigkeit wird damit über die Leitungen 16 und 24 in die Kammer 21 des Verstellzylinders 3 eingespeist, wodurch dieser relativ schnell (in Fig. 3 nach links) ausfährt. Solange der Näherungsschalter 7 betätigt bleibt, versorgt auch das Schaltrelais 8 den jeweiligen Elektromagneten des Wegeventiles 9 mit Strom, wodurch dieses in seiner in Fig. 3 linken Stellung und damit der Verstellzylinder 3 mit dem Auszugteil 1 ausgefahren bleibt.

Kehrt die Zugdeichsel beim Einschwenken aus der Kurvenfahrt in die Geradeausfahrt wieder in die Mittelachse des Zugfahrzeuges zurück, so wird das Wegeventil 9 über das Schaltrelais 8 vollständig nach links verschoben. Durch den daraus resultierenden Druckausfall in der Leitung 13 läuft der Luftmotor 11 an und die Hydraulikpumpe 12 fördert Hydraulikflüssigkeit über das Wegeventil 19 und die Leitungen 14 und 18 und über das entsperrbare Rückschlagventil 19 in die Kammer 20 des Verstellzylinders 3. Dadurch fährt der Kolben des Verstellzylinders und damit das Auszugteil mit Kupplungsplatte 4 langsam ein, wodurch die in der Kammer 21 des Verstellzylinders 3 befindliche Hydraulikflüssigkeit über die entsperrbaren Rückschlagventile 22 und 23 sowie die Leitungen 24 und 16 zurück in den Druckspeicher 17 gedrängt wird. Aufgrund dieser Arbeitsweise wird der Druckspeicher 17 stets parallel zu Einfahrvorgang des Auszugteils 1 gefüllt, so daß die Zugdeichsel stets erst dann voll eingefahren ist, wenn der Druckspeicher seinen Enddruck erreicht hat.

Ist der Kolben des Verstellzylinders 3 voll eingefahren und der Vorspanndruck im Druckspeicher 17 erreicht, so schaltet der Druckschalter 25 das Wegeventil 9 wieder stromlos, wodurch dieses in seine in Fig. 3 gezeigte Mittelstellung zurückkehrt.

In der Schemadarstellung gemäß Fig. 3 sind lediglich die wesentlichsten Elemente und Leitungsführungen dargestellt. Der Übersichtlichkeit halber wurde auf eine detaillierte Darstellung der elektrischen Steueranordnung sowie auf eine detaillierte Darstellung der in derartigen Hydraulikanordnungen    üblichen    Druckbegrenzungs-,
Überprüfungs- und Befüllungseinrichtungen verzichtet.

## Ansprüche

1. Verfahren zur hydraulischen Längenverstellung einer teleskopierbaren Zugdeichsel für einen
Zentralachsanhänger, wobei die Zugdeichsel automatisch bei einem Auslenken gegenüber der Mittelachse des Zugfahrzeuges, d.h. bei Kurvenfahrt,
ausgefahren und nach der Rückkehr in die Mittelachse, d.h. bei Geradeausfahrt, wieder eingefahren
wird, dadurch **gekennzeichnet,**
daß das Ausfahren der Zugdeichsel schneller als
das Einfahren erfolgt.

2. Verfahren nach Anspruch 1, dadurch gekennzeichnet, daß das Hydraulikmedium zum
schnellen Ausfahren der Zugdeichsel einem Druckspeicher entnommen und dieser im Verlaufe des
vergleichsweise langsamen Einfahrens der Zugdeichsel parallel zum Einfahrvorgang langsam wieder gefüllt wird.

3. Verfahren nach Anspruch 2, dadurch gekennzeichnet, daß das Füllen des Druckspeichers
in der Weise parallel zum Einfahren der Zugdeichsel gesteuert wird, daß die Zugdeichsel erst dann
voll eingefahren ist, wenn der Druckspeicher seinen
Enddruck erreicht hat.

4. Anordnung zur Durchführung des Verfahrens
nach Anspruch l, 2 oder 3, mit einer aus einem
Auszugteil und einem Festteil bestehenden Zugdeichsel, einem zwischen dem Auszugteil und dem
Festteil eingekoppelten Verstellzylinder, der mit einer Hydraulikanordnung in Verbindung steht, die
über eine elektrische Steueranordnung betätigbar
ist, welche über Sensoren den Ausschlag der Zugdeichsel gegenüber der Mittelachse des Zugfahrzeuges automatisch abtastet, dadurch gekennzeichnet, daß die Hydraulikanordnung und/oder die
elektrische Steueranordnung derart gestaltet sind,
daß das Hydraulikmedium in den Verstellzylinder
(3) zum Ausfahren des Auszugteiles (1) schneller
eingespeist wird als das Hydraulikmedium zum
Einfahren des Auszugteiles.

5. Anordnung nach Anspruch 4, dadurch gekennzeichnet, daß die Hydraulikanordnung einen
Druckspeicher (17) aufweist, der zum Ausfahren
des Auszugteiles (1) über ein Ventil mit dem Verstellzylinder (3) verbindbar ist.

6. Anordnung nach Anspruch 5, dadurch gekennzeichnet, daß die Hydraulikanordnung eine Hydraulikpumpe (12) sowie Steuermittel aufweist,
über die der Verstellzylinder (3) in dem Maße eingefahren wird, in dem der Druckspeicher (17) gefüllt wird.

7. Anordnung nach Anspruch 6, dadurch gekennzeichnet, daß die Hydraulikpumpe (12) von
einem Luftmotor (11) angetrieben ist.

8. Anordnung nach einem oder mehreren der
vorhergehenden Ansprüche, dadurch gekennzeichnet, daß die Hydraulikanordnung und die elektrische Steueranordnung auf dem Zentralachsanhänger angeordnet sind.

9. Anordnung nach einem oder mehreren der
vorhergehenden Ansprüche, mit einer mit einer
Kupplungsplatte (4) zum Anschluß an einer Sattelkupplung ausgestatteten Zugdeichsel, dadurch gekennzeichnet, daß die Sensoren als berührungslos
arbeitende Näherungsschalter (7) ausgebildet sind,
die auf der Kupplungsplatte (4) angeordnet sind
und daß die Auslöseelemente (8) für die Näherungsschalter (7) auf der Sattelkupplung befestigt
sind.

FIG.1

FIG.2

EP 0 306 816 A1

FIG.3

EP 0 306 816 A1

**Europäisches Patentamt**

# EUROPÄISCHER RECHERCHENBERICHT

Nummer der Anmeldung

EP 88 11 4192

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 702 400  (WACKENHUT) <br> * Ansprüche * <br> --- | 1 | B 62 D  53/08 <br> B 60 D   1/14 |
| A | US-A-3 181 889  (HARRIS) <br> * Spalten 1,2; Figuren 1-4 * <br> --- | 1,4,9 | |
| A | GB-A-2 016 980  (B + G HYDRAULICS) <br> * Figur; Zusammenfassung; Seite 2, Zeilen 68-109 * <br> --- | 1,2,5,6 | |
| A | FR-A-2 063 455  (CLOUP) <br> * Seite 1, Zeile 32 – Seite 2, Zeile 11; Anspruch 1 * <br> ----- | 1,2,5,6 | |

RECHERCHIERTE SACHGEBIETE (Int. Cl.4)

B 62 D
B 60 D
F 15 B

Der vorliegende Recherchenbericht wurde für alle Patentansprüche erstellt

| Recherchenort | Abschlußdatum der Recherche | Prüfer |
|---|---|---|
| DEN HAAG | 14-11-1988 | SCHMAL R. |